# EUROPEAN PATENT APPLICATION

(11) **EP 1 279 762 A2**
(43) Date of publication of application: **29.01.2003**
(21) Application number: 02078008.6
(22) Date of filing: 23.07.2002
(51) Int. Cl.: D06N 3/00, D06N 3/14

(54) **Sheet structure for leather-like material with surface structure and method for manufacturing the same**

(30) Priority: 23.07.2001 JP 2001221783
(71) Applicant: Koatsu Cloth Co., Ltd., Kobe-shi, Hyogo-Ken (JP)
(72) Inventor: Kim, Soojin, Suma-ku Kobe-shi Hyogo-ken (JP)
(74) Representative: Iemenschot, Johannes Andreas, Ir.

(57) **Abstract**

A sheet structure obtained by separately producing an artificial leather base material and a leather-like skin, and combining the two together in simple equipment. An artificial leather having air permeability is produced as follows. A film material is filled in concavities of a transfer sheet having a convexo-concave shape reverse to a leather-like convexo-concave surface to form a perforated film layer. On the perforated film layer is formed a porous layer formed of open-cell foam. The porous layer is formed by coating an aqueous polyurethane dispersion solution containing base resin, which is foamed through agitation, followed by drying. The resultant sheet structure is thermally laminated on a desired base material. The base material is composed of a nonwoven fabric, a woven fabric, a knit, or the like, impregnated with foamed polyurethane as necessary. A thermally-fused open-cell foamed layer may additionally be formed on the porous layer to enhance flexibility and peeling strength, Lastly, the transfer sheet is peeled off.

## Description

### BACKGROUND OF THE INVENTION

### 1. Field of the Invention

The present invention relates to a sheet structure and a method for manufacturing the same, and more particularly to a sheet structure that can be formed integrally with any given base material in simple equipment.

### 2. Description of the Related Art

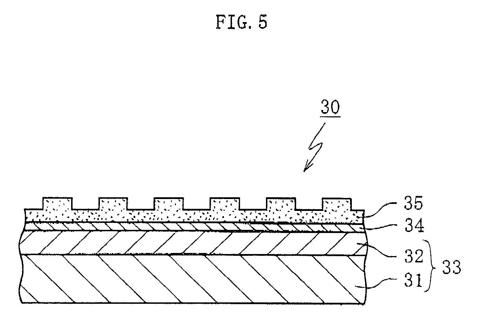

An artificial leather, a synthetic leather, or the like material is typically produced by forming a porous layer on a base fabric such as a nonwoven fabric or a woven fabric, followed by subjecting its surface to a suitable treatment to impart color and shape similar to those of a natural leather to the layered body. Fig. 5 illustrates a sectional configuration of a wet-processed artificial leather of conventional design. This artificial leather 30 includes a leather base material 33 consisting of an air-permeable base fabric 31 and an air-permeable porous layer 32 formed on the base fabric 31. The air-permeable porous layer 32 has a leather-like convexo-concave surface. On the leather base material 33 is laminated a film layer 35 containing urethane resin, via an adhesive 34. The film layer 35 has a leather-like convexo-concave surface.

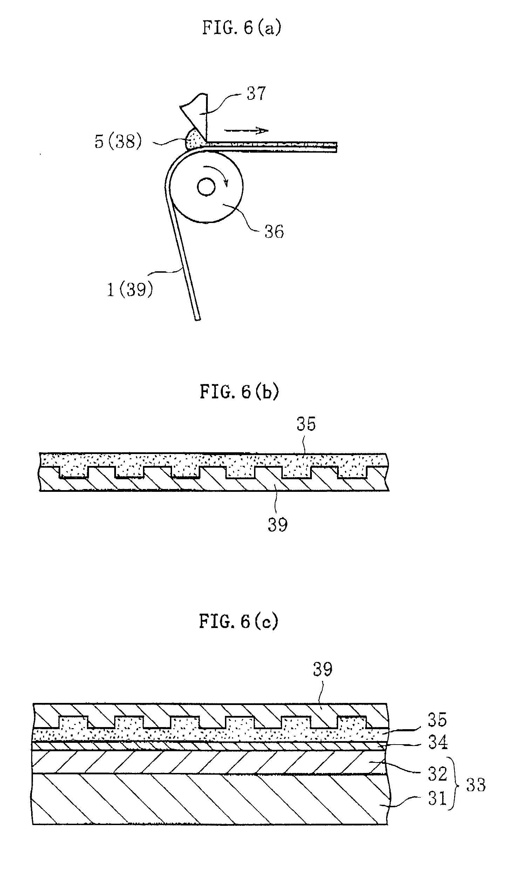

In general, such an artificial leather 30 is produced in accordance with a manufacturing method as shown in Figs. 6(a) through 6(c). Specifically, a film material 38, which is formed into the film layer 35, is supplied on a transfer sheet 39 being transmitted by a roller 36 made of metal. The transfer sheet 39 has a convexo-concave shape reverse to the leather-like convexo-concave surface. On the roller 36 is disposed a blade 37 with a predetermined interval secured therebetween. The blade 37 acts to coat the film material 38 on the transfer sheet 39. The film material 38 is then dried, and thereby, as shown in Fig. 6(b), the film layer 35 having a leather-like convexo-concave shape is formed on the transfer sheet 39. Next, the film layer 35 is coated with the adhesive 34 and, as shown in Fig. 6(c), the transfer sheet 39 and the film layer 35 are laminated on the leather base material 33 in such a way that the adhesive 34 makes contact with the porous layer 32. Lastly, after a drying process, the transfer sheet 39 is peeled off, thereby obtaining the artificial leather 30 shown in Fig. 5.

However, the artificial leather shown in Fig. 5 has the following disadvantages. Since neither the adhesive 34 nor the film layer 35 has air permeability, when used in leather shoes or the like, the artificial leather exhibits uncomfortable wetness in contrast to a natural leather. Furthermore, because of a considerable thickness of the combination of the adhesive 34 and the film layer 35, the artificial leather inevitably becomes hard.

Trying to solve these problems, the applicant of the present application has already proposed, in Japanese Patent No. 2954847, an artificial leather 40 shown in Fig. 7 in section. The artificial leather 40 has excellent air permeability and flexibility similar to those of a natural leather, and thus succeeds in providing touch and feeling inherent in a natural leather when used in leather shoes, etc. In the figure, reference numeral 31 represents a base fabric, 32 represents a porous layer, 33 represents a leather base material, 43 represents a leather-like film layer, 44 represents a convexity, and 45 represents a concavity.

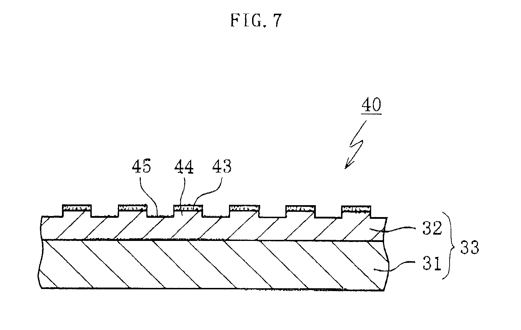

In the artificial leather 40 shown in Fig. 7, although excellent air permeability and flexibility similar to those of a natural leather can be attained, the base fabric 31 is integrally formed. Therefore, where the base fabric 31 needs to be replaced with another desired one at the user's request, it is usually inevitable that the time between order replacement and delivery is considerably long. To avoid this, a wide variety of inventories had to be stocked in the minimum necessary number, and this makes impossible reduction in the inventory-related cost. Moreover, artificial leather materials basically find applications in fashionable merchandise. Thus, in order to broaden stylish product line in a timely manner, it is desirable that users can readily combine an optimal base fabric and an optimal leather-like skin on their own. However, this is impossible in reality because of the necessity of a large-scale manufacturing installation.

### SUMMARY OF THE INVENTION

The present invention has been devised to solve the above-described problems with the conventional art, and accordingly one object of the present invention is to provide a sheet structure that allows users to combine together an optimal base fabric and an optimal leather-like skin with simple equipment such as a heating roller. Another object of the present invention is to provide a sheet structure with which an optimal base fabric and an optimal leather-like skin can be combined together while maintaining excellent air permeability, by applying an adhesive in a dot-scattered manner.

According to the present invention, a sheet structure includes a peelable transfer sheet having a convexo-concave shape reverse to a leather-like convexo-concave surface; a leather-like film layer made of a film material coated on the transfer sheet; and a porous layer formed on the film layer. In accordance with the above-described conventional method (the above-mentioned Japanese Patent No. 2954847), the leather-like film layer can be formed as an air-permeable leather-like film layer having a myriad of fine pores by filling the film material only in the concavities of the transfer sheet. The leather-like film layer does not necessarily have to be provided with fine pores so long as the sheet structure is used in an application that does not require air permeability. When used in an application that requires a considerably strong and hard artificial skin, as shown in Fig. 6(b), the film layer 35 with no pores may be formed on the transfer sheet.

The porous layer is preferably formed of open-cell foam having a cell diameter ranging from 20 to 250 µm. If the cell diameter is greater than 250 µm, although the air permeability is not sacrificed, the leather-like film layer sustains poor scratch resistance, and also the peeling strength of the porous layer is unfavorably lowered. This results in the sheet structure being unsuitable as a leather-like sheet. By contrast, if the cell diameter is equal to or less than 20 µm, although the leather-like film layer exhibits excellent scratch resistance, the air permeability is deteriorated. In addition, setting the cell diameter at 20 µm or below leads to an undesirable increase in the manufacturing cost because of accompaniment of technical difficulty.

The cell diameter is adjustable by changing an expansion ratio at which a material used for the porous layer, for example, an aqueous polyurethane dispersion solution is foamed. To keep the cell diameter in a range from 20 to 250 µm, the expansion ratio is set to be 1.25 to 2.5 times the volume of the aqueous polyurethane dispersion solution.

The porous layer is formed by coating, for example, an aqueous polyurethane dispersion solution containing base resin, which has been foamed through agitation, on the film layer, followed by drying. Where the artificial leather is required to exhibit high flexibility, on the porous layer is additionally formed a thermally-fused open-cell foamed layer. This thermally-fused open-cell foamed layer is formed by coating a thermally-fused aqueous polyurethane dispersion solution, which has been foamed through agitation so that the specific gravity is kept in a range from 0.10 to 0.7 (expansion ratio: ca. 1.3 to 9.5), on the porous layer, followed by drying.

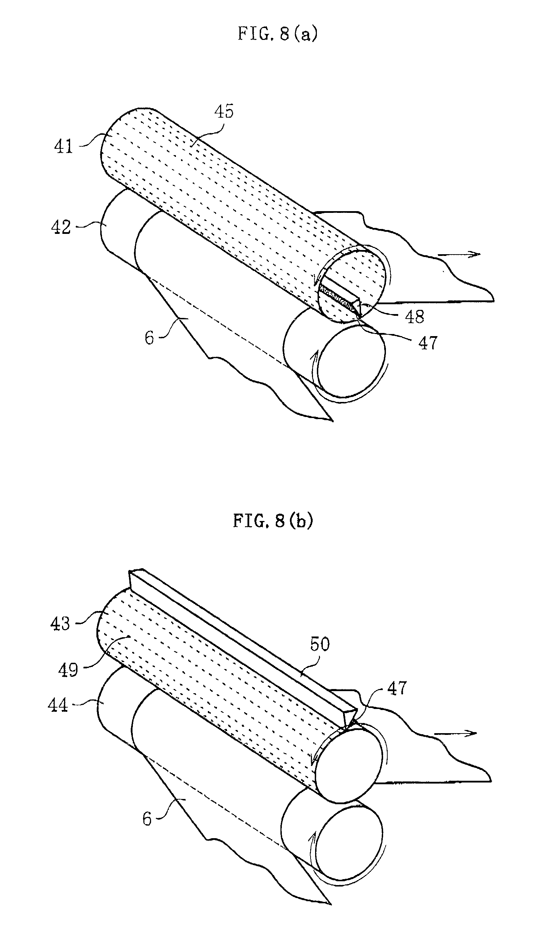

The resultant sheet structure can be readily combined with a base material composed of a nonwoven fabric, a woven fabric, a knit, or the like. Specifically, for example, the sheet structure can be combined with the base material by being passed through a heating roller or the like, with the thermally-fused open-cell foamed layer overlaid on the base material. In the case of omitting the thermally-fused open-cell foamed layer, the combination is obtained by press-fitting the undried porous layer solution, which has been applied during the formation of the porous layer, to the base material under an adequate force, followed by drying. This helps simplify a porous layer forming process and a bonding process. Alternatively, the combination can be readily obtained by coating an adhesive on the porous-layer side of the sheet structure or the base material in a dot-scattered manner, followed by passing the laminated body through a press machine such as a press roller. The reason why the adhesive is coated in a dot-scattered manner is to maintain sufficient air permeability. As shown in Figs. 8(a) and 8(b), the coating can be readily achieved by passing a base material 6 between a pair of an upper roller 41 (or 43) and a lower roller 42 (or 44). In Fig. 8(a), an adhesive 47 contained within the hollow roller 41 having a multiplicity of pores 45 formed therein in a dot-scattered manner is squeezed through the pores to the outer peripheral surface of the roller 41 by an inner blade 48. In Fig. 8 (b), the adhesive 47 is filled in a multiplicity of concavities 49, formed on the outer peripheral surface of the roller 43 in a dot-scattered manner, by an outer blade 50. It is needless to say that the patterns of the pore 45 and the concavity 49 are changeable as required. Aqueous polyurethane, hot melt polyurethane, etc. are usable as the adhesive 47. In the case of using hot melt polyurethane, the coating device is provided with a heater. The adhesive should preferably be made of a moisture-crosslinking type (moisture-setting type) compound. Because, the adhesive made of such a compound is cured after bonding and is no longer softened under high temperature, resulting in an advantage in enhancing the strength of the leather-like sheet structure. Note that, in addition to the methods shown in Figs. 8(a) and 8(b), the adhesive can also be coated in a dot-scattered manner by a method whereby a multiplicity of needles, of which each has its end coated with an adhesive, are pressed against the base material 6. After combining the sheet structure with the base material 6, the transfer sheet is peeled off, thereby realizing an artificial leather as a finished product.

Moreover, application of the present invention makes it possible to readily produce a leather-like sheet structure without using an adhesive. That is, a leather-like sheet structure can be readily produced by the following four steps: coating a film layer made of a film material on a peelable transfer sheet having a convexo-concave shape reverse to a leather-like convexo-concave surface; forming a porous layer on the film layer; press-fitting a base material on the porous layer in an undried state; and peeling off the transfer sheet. In this manufacturing method, the undried porous layer is practically utilized as a bonding layer.

### BRIEF DESCRIPTION OF THE DRAWINGS

In the accompanying drawings:
Figs. 1(a), 1(b), and 1 (c) are sectional views each showing a method for manufacturing a sheet structure according to a first embodiment of the present invention;
Figs. 2(a), 2 (b) , and 2(c) are sectional views each showing a method for manufacturing a sheet structure according to a second embodiment of the present invention;
Figs. 3(a), 3(b), 3(c), and 3(d) are sectional views each showing a method for manufacturing a sheet structure according to a third embodiment of the present invention;
Fig. 4(a) is a side view showing a thermal laminating press device, and Fig. 4 (b) is a side view showing another thermal laminating press device;
Fig. 5 is a sectional view showing a conventional artificial leather;
Figs. 6(a) through 6(c) are sectional views each showing a method for manufacturing a conventional artificial leather;
Fig. 7 is a sectional view showing a conventional artificial leather having air permeability; and
Figs. 8(a) and 8(b) are perspective views each showing a device for coating an adhesive in a dot-scattered manner.

### DETAILED DESCRIPTION OF THE PREFERRED EMBODIMENTS

Hereinafter, embodiments of the present invention will be described. Note that, in this specification, the term "parts" refers to a mass ratio.

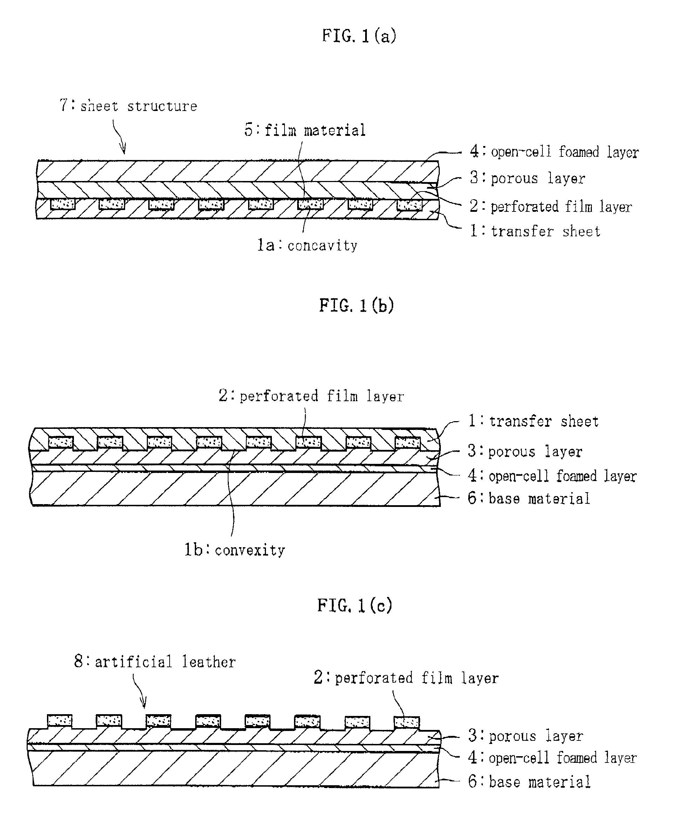

As shown in Figs. 1(a) through 3(a), sheet structures 7, 7a, and 7b of the present invention are each constituted by laminating a porous layer 3 on a perforated film layer 2 formed on a transfer sheet 1. This is the basic configuration common to these three sheet structures 7, 7a, and 7b shown in Figs. 1(a) through 3(a).

The sheet structure 7 shown in Fig, 1(a) is constituted by laminating together the transfer sheet 1 with the perforated film layer 2, the porous layer 3, and an open-cell foamed layer 4 in the order named. The following is a method for producing the sheet structure 7. Firstly, as seen from Fig. 1(a), a film material 5 is coated on the transfer sheet 1 having a convexo-concave surface reverse to a leather-like convexo-concave surface so as to be filled only in concavities 1a of the convexo-concave shape, using the roller 36 and the blade 37 shown in Fig. 6. It should be noted that the roller 36 is made of rubber instead of hitherto-employed metal, and that the gap between the blade 37 and the roller 36 is made smaller than in Fig. 6 so as to be slightly narrower than the thickness of the transfer sheet 1. Thus, the transfer sheet 1 and the roller 36 are brought into a depressed state by being pressed by the blade 37. This allows, when the transfer sheet 1 is transmitted by the rotation of the roller 36, the film material 5 to be scraped off by the blade 37. In this way, as shown in Fig. 1 (a), the film material 5 is filled only in the concavities 1a of the convexo-concave shape of the transfer sheet 1.

The film material 5 typically contains 10 to 30% of resin, 5 to 10% of pigment, and a solvent. The film material 5 employed in this embodiment has a composition of 20% of polyurethane resin, 5% of pigment, and 75% of solvent. The solvent is prepared by mixing together dimethylformamide, methylethylketone, and toluene. In order to ensure an implementation of environmental friendliness, the film material 5 should preferably be made of water soluble polyurethane, which is used for the subsequently-described porous layer 3 and the open-cell foamed layer 4.

Next, the transfer sheet 1 coated with the film material 5 is put into a drying furnace to dry the film material, and then on the transfer sheet 1 with the perforated film layer 2 is formed the porous layer 3 so as to be laminated on the perforated film layer 2. After drying the porous layer 3 with the same drying furnace, the open-cell foamed layer 4 is laminated on the porous layer 3 and is then dried in the same drying furnace. The formation of the porous layer 3 and the open-cell foamed layer 4 is achieved using the device shown in Fig. 6(a) used for application of the film material 5. At this time, the gap between the blade 37 and the roller 36 is, in contrast to the case of forming the perforated film layer 2, made slightly larger than the thickness of the transfer sheet 1, as shown in Fig. 6.

As described hereinabove, the sheet structure 7 is constituted by coating the porous layer 3 and the open-cell foamed layer 4 on the transfer sheet 1 with the perforated film layer 2, followed by drying. As shown in Fig. 1(b), the resultant sheet structure 7 is polymerization-bonded on a suitable base material 6. Although the base material 6 may be any of a nonwoven fabric, a woven fabric, a knit, and the like materials, it is preferable to use a fabric material impregnated with, for example, a foamed dispersion solution of aqueous polyurethane, as necessary. Using such an impregnated base material 6 is advantageous in enhancing the peeling strength of the sheet structure 7.

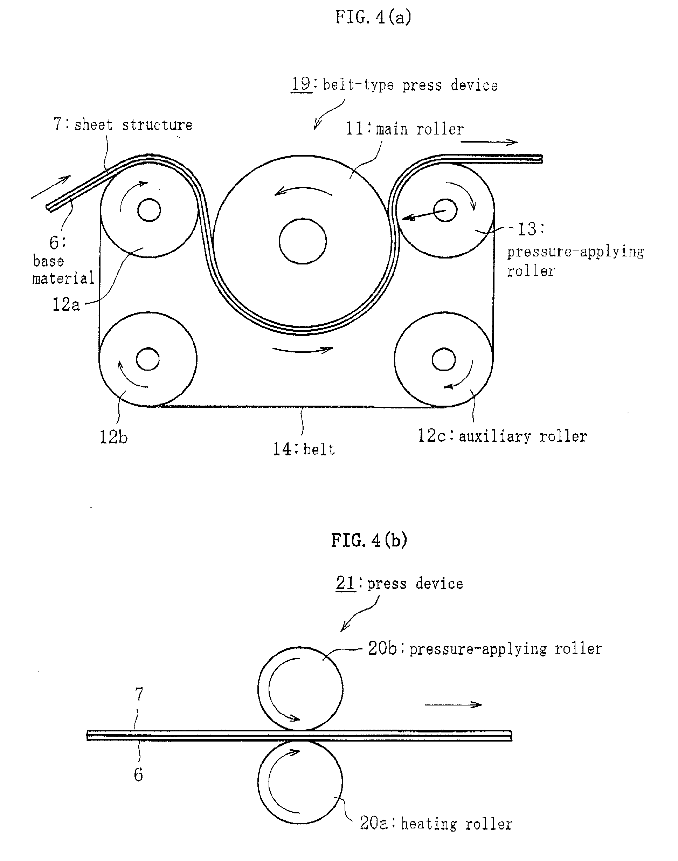

As a thermal laminating press device used for polymerization bonding of the base material 6, for example, a belt-type press device 19 as shown in Fig. 4(a) can be used. This device is used as a transfer device for the transfer sheet 39 shown in Fig. 6(c) in the conventional artificial leather manufacturing process. The belt-type press device 19 has a main roller 11 capable of applying heat at a predetermined temperature, and a belt 14 for pressing the base material 6 and the sheet structure 7 against the main roller 11. The belt 14 is held by auxiliary rollers 12a, 12b, and 12c, and also a pressure-applying roller 13. The main roller 11 and the pressure-applying roller 13 are each approximately 1.7 m in width. The base material 6 and the sheet structure 7 are inserted between the auxiliary roller 12a and the main roller 11, pressed by the main roller 11 under the tension exerted by the belt 14, and then fed to the pressure-applying roller 13 while being heated. The pressure-applying roller 13, which acts to retain the belt 14, is pressed under a pressure of approximately 6 tons in a direction toward the main roller 11. By exploiting the pressure, the open-cell foamed layer 4 is thermally laminated on the base material 6, and simultaneously convexities 1b of the leather-like pattern of the transfer sheet 1 are transferred onto the porous layer 3. Subsequently, the sheet structure 7 and the base material 6 are cooled and then the transfer sheet 1 is peeled off from the sheet structure 7. Eventually, as shown in Fig. 1(c), an artificial leather 8 of the first embodiment is realized. Note that the thermal laminating press device is not limited to that illustrated in Fig. 4(a), but may be of a simple press device 21 as shown in Fig. 4(b) composed solely of a heating roller 20a and a pressure-applying roller 20b, which serves the purpose of the present invention.

The porous layer 3 and the open-cell foamed layer 4 are each formed by applying a foamed body having a thixotropy index of 2 to 4, which is obtained by foaming a compound solution containing at least base resin and a filler, followed by drying. The viscosity of the foamed body is preferably kept in a range from 5,000 to 35,000 centipoises, more preferably from 16,000 to 22,000, and particularly from 18,000 to 20,000. If the viscosity of the foamed body is smaller than 5,000 centipoises, during the formation of the porous layer and the open-cell foamed layer, the cells tend to be broken. By contrast, if the viscosity is greater than 35,000 centipoises, it becomes practically impossible to coat the foamed body on the base fabric.

Moreover, the compound solution in an unfoamed state should preferably have a viscosity in a range from 5,000 to 30,000 centipoises, more preferably from 12,000 to 15,000 centinoises Using the compound solution having a viscosity kept in such a range makes it possible to obtain a foamed body having the above-mentioned viscosity range.

It is preferable that, in order for the thixotropy index and the viscosity to be adjusted in the above-mentioned range, the compound solution used for forming the porous layer and the open-cell foamed layer contain, in addition to the base resin and the filler, a dispersing agent, a foam stabilizer, a foaming assist agent, a thickener, and the like. Moreover, the compound solution should preferably contain an elasticizer for imparting elasticity to the porous layer and the open-cell foamed layer to be formed, and also a crosslinking agent for crosslinking the base resin. The elasticizer serves to prevent occurrence of such a problem that cells to be formed are broken by a pressing force and the walls of the cells are adhered each other, and consequently the cells are no longer returned to their original state. It is needless to say that various additives can be added, such as a pigment, that are commonly used for production of a leather-like sheet structure, as required.

As the base resin contained in the compound solution, those having excellent foamability are suitably used. Examples thereof include acrylic polymer such as polyacrylate ester, polymethacrylate ester, or copolymer thereof; polyurethane; diene polymer such as synthetic rubber, natural rubber, or latex; and a mixture thereof. This base resin can be used in the form of emulsion or dispersion. Further, as the base resin, those having high solid content, low TG (glass transition temperature), excellent frothing property, and small content of defoamer are suitably used in view of the aforementioned foamability.

The compound solution contains a filler for imparting a thixotropic property. Examples of usable fillers include clay, aluminum hydroxide, and calcium carbonate. The content of the filler is kept in a range from 5 to 100 parts by weight with respect to 100 parts by weight of the solid content of the base resin.

Examples of the dispersing agent contained in the compound solution include low-molecular weight sodium polycarboxylate, and sodium tripolyphosphate. The preferred content of the dispersing agent is kept in a range from 0.2 to 2 parts by weight with respect to 100 parts by weight of the solid content of the base resin.

Taken up as an example of the foam stabilizer contained in the compound solution is ammonium long-chain alkylcarboxylate, such as ammonium stearate. The preferred content of the foam stabilizer is kept in a range from. 1 to 8 parts by weight with respect to 100 parts by weight of the solid content of the base resin.

The compound solution may contain a foaming assist agent. Examples of the foaming assist agent include sodium dialkylsulfosuccinate. The content of the foaming assist agent is kept in a range from 1 to 7 parts by weight with respect to 100 parts by weight of the solid content of the base resin.

Further, the compound solution may contain a thickener. The thickener, together with the filler and others, exhibits a thixotropic property to stabilize the produced cells. Preferred examples of the thickener include ammonium polyacrylate and polyacrylic acid. The content of the thickener is kept in a range from 0.5 to 5 parts by weight with respect to 100 parts by weight of the solid content of the base resin.

The foamed body, used as the material for forming the porous layer 3 and the open-cell foamed layer 4, is obtained by foaming, for example, an aqueous polyurethane dispersion solution at a predetermined expansion ratio through agitation. The expansion ratio (ratio of volume of foamed impregnated solution to volume of original impregnated solution) varies proportionally depending on the size of cell diameter or the degree of air permeability, and thus has to be set optimally according to applications involving artificial leather. For example, the expansion ratio is kept in a range from 1.25 to 2.5 in the porous layer 3, and in a range from 1.35 to 9.5 in the open-cell foamed layer 4.

In the porous layer 3, if the expansion ratio is smaller than 1.25, the resultant sheet structure becomes hard and is thus unsuitable as a leather-like sheet, and also the scratch resistance is deteriorated. By contrast, if the expansion ratio is greater than 2.5, the peeling strength between the porous layer 3 and its adjacent open-cell foamed layer 4 or the base material 6 is undesirably lowered.

In the open-cell foamed layer 4, if the expansion ratio is smaller than 1.35, it becomes difficult to make a coat of uniform thickness. By contrast, if the expansion ratio is greater than 9.5, it becomes difficult to secure the minimum necessary thickness due to the press-fitting force exerted at the time of bonding.

It has been confirmed that the cell diameter corresponding to the above-mentioned expansion ratio is kept in a range from approximately 20 to 250 µm.

Besides, points of difference between the porous layer 3 and the open-cell foamed layer 4 will be listed below.

| | | |
|---|---|---|
| | Porous layer 3 | Open-cell foamed layer 4 |
| Crosslinking agent | Present | Absent |
| Polymerization degree | High | Low |
| Strength | High | Low |
| Softening point | High | Low |

The aqueous polyurethane dispersion solution may be added with water to adjust its solid content and viscosity. The preferred content of water is kept in a range from 30 to 200 parts by weight with respect to 100 parts by weight of the solid content of the base resin.

In the present invention, where the base resin has self-crosslinkability to some extent, it is cured with a lapse of time. In the case of using slow-curing base resin a crosslinking agent needs to be added thereto. Taken up as a preferred example of the crosslinking agent is isocyanate. The content of the crosslinking agent is kept in a range from 1.5 to 4 parts by weight with respect to 100 parts by weight of the solid content of the base resin.

Depending on the property of the base resin in use, there is a possibility that the cells of the porous layer and the open-cell foamed layer are broken by a pressing force and walls of the cells are adhered each other, and consequently the cells are no longer returned to their original state. To avoid such a phenomenon, an elasticizer is preferably added. Taken up as a preferred example of the elasticizer is silicone oil. The content of the elasticizer is kept in a range from 0.2 to 1.5 parts by weight with respect to 100 parts by weight of the solid content of the base resin.

Next, the compound solution thus foamed is continuously coated on the perforated film layer 2 of the transfer sheet 1 and on the porous layer 3 in a predetermined thickness using the blade 37 shown in Fig. 6(a). When coated by the blade 37, the compound solution undergoes smoothing caused by shear. The thickness of the compound solution to be coated is determined in accordance with the leather-like sheet structure in finished form. The foamed compound solution, having a thixotropic property, is brought into a state of near gelling when coated. In this state, the foamed structure of the compound liquid layer is less prone to breakage, and is thus maintained even in the subsequent drying process. Moreover, since this compound solution has high solid content, the subsequent drying process is completed in a short time. Such advantages can be considered conductive to maintaining the highly foamed structure,

To prevent the foamed state of the foamed compound solution from being broken, the porous layer 3 and the open-cell foamed layer 4 are preferably dried as follows. These layers are subjected to far infrared radiation first to dry only the surfaces thereof, thereby forming a thin dried film. Then, hot-air drying is performed thereon using a pin tenter dryer or the like. Whether or not preheating (pre-drying) using far infrared rays is performed is determined based on the components or expansion ratio of the compound solution. During this drying process, the foamed state is maintained as described above, and the resultant porous layer is accordingly maintained in a foamed state. Whether or not the foamed state is maintained can be confirmed by checking that, after application of the compound solution, the layer thickness of the wet-state coated layer and the layer thickness of the dried-state coated layer are substantially the same. After evaporating water contained in the compound solution, the sheet structure 7 of the present invention is obtained.

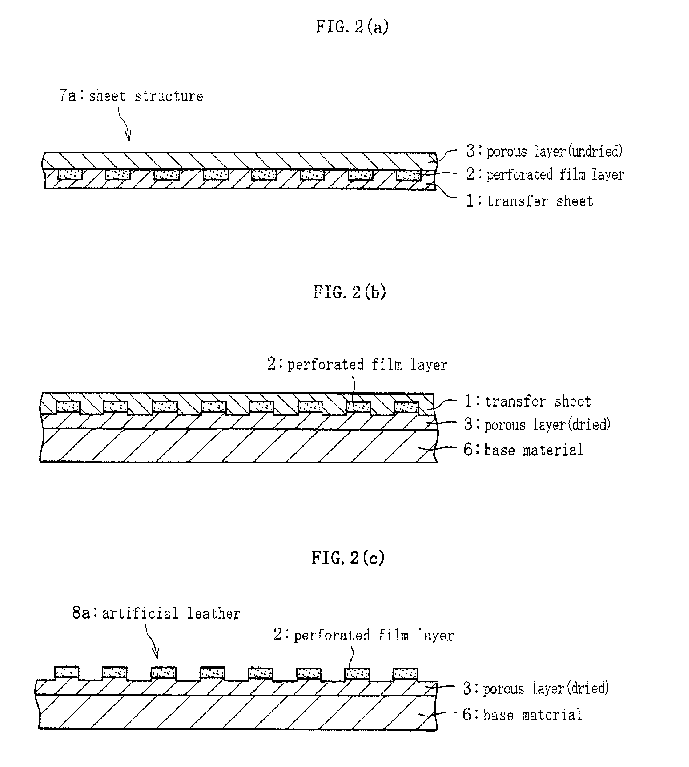

The first embodiment of the present invention has thus far been described. Subsequently, second and third embodiments of the present invention will be described with reference to Figs. 2(a) through 3(c). In the second and third embodiments, the open-cell foamed layer 4 of the first embodiment shown in Figs. 1 (a) through 1(c) is omitted. Otherwise, these embodiments are substantially the same as the first embodiment. The second embodiment shown in Fig. 2 (a) requires less process steps than in Fig. 1(a) and thus provides a sheet structure 7a of simpler configuration. In this construction, a porous layer 3 in an undried state is directly press-fitted to a base material 6. Because of the absence of the open-cell foamed layer 4, the sheet structure 7a is made slightly harder. Thus, the sheet structure 7a is expected to be used for applications different from those for which the sheet structure 7 of the first embodiment can be used.

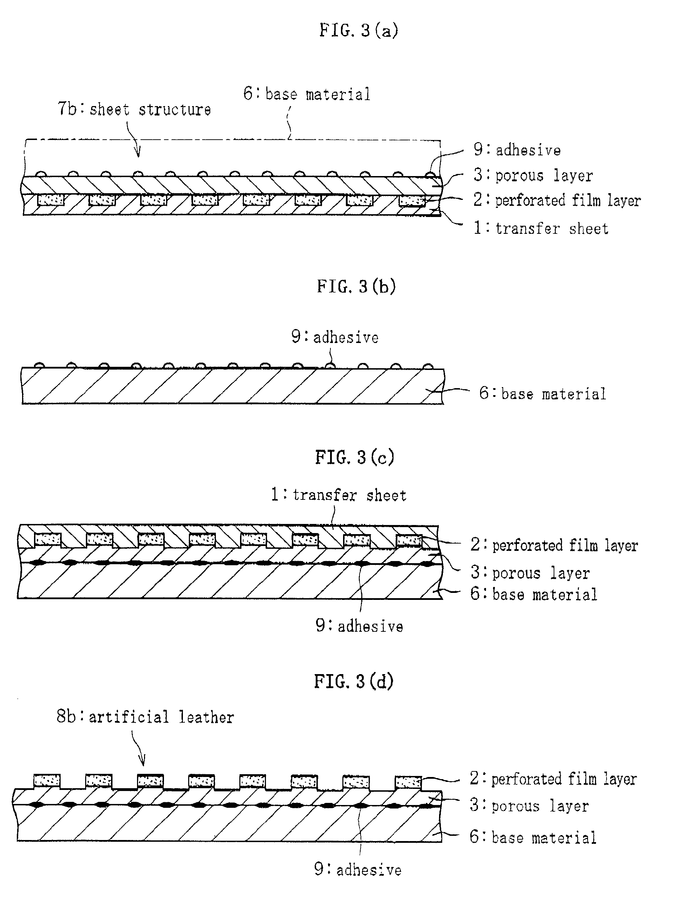

In the third embodiment, a porous layer 3 is, unlike the case shown in Fig. 1(b) in which a thermal lamination method is adopted, bonded to a base material 6 with an adhesive 9 coated in a dot-scattered manner (Fig. 3(c)). As the adhesive 9, for example aqueous polyurethane or moisture-setting type hot melt polyurethane is used. A moisture-setting type (moisture-crosslinking type) compound refers to an organic compound which is polymerized by chemical reaction with water. In general, urethane prepolymer having isocyanate group and a compound having alkoxysilyl group are known. Another examples thereof include a mixture of ketimine and a compound having epoxy group and a mixture of carboxyl group and metallic oxide belonging to Group IIa of the Mendeleeff Periodic Table of the Elements. An adhesive containing such compounds is cross-linked by reacting with moisture in the air, and serves to bend together the porous layer 3 and the base material 6 strongly. After the bonding, the adhesive is cured and is no longer softened under high temperature, resulting in an advantage in enhancing the strength of the leather-like sheet structure.

The purpose of coating the adhesive 9 in a dot-scattered manner is to secure air permeability, and the coating can be performed by the method described previously with reference to Figs. 8(a) and 8(b), for example. The dot-scattered adhesive 9 can be formed either on the surface of the porous layer 3, as shown in Fig. 3 (a), or on the surface of the base material 6, as shown in Fig. 3 (b). Such a method of combining together the sheet structure and the base material 6 using the adhesive 9 eliminates the need to prepare a thermal laminating device, and thus makes it possible to readily produce an artificial leather so long as, in addition to the sheet structure 7b and the base material 6a, a simple press device is prepared.

Although the embodiments of the present invention have thus far been described, the present invention is not limited to those embodiments and accordingly various changes and modifications may be possible. For example, in the above-described embodiment, the perforated film layer with the porous layer is thermally press-fitted to the base material, with the transfer sheet still attached thereto. This is because, being considerably thin and soft, the perforated film layer with the porous layer should desirably be kept attached to the transfer sheet until the thermal press-fitting process is completed from the viewpoint of handleability. If the transfer sheet is peeled off from the perforated film layer with the porous layer prior to the thermal press-fitting process, the convexo-concave pattern of the perforated film layer tends to change during the process. This makes it very difficult to control production quality properly during storage and transportation. In this connection, by preparing substantial equipment designed for bonding together the base material and the perforated film layer with the porous layer, the perforated film layer with the porous layer can be stored and transported properly even after the transfer sheet is peeled off. If the perforated film layer with the porous layer is peeled off from the transfer sheet in advance, a transfer sheet peeling process can be omitted, thereby achieving further rationalization of production.

As described heretofore, according to the sheet structure of the present invention, the porous layer and the open-cell foamed layer, which are commonly formed on the surface of the base material, are laminated on the film layer of the transfer sheet. With this configuration, the sheet structure can be provided independently of the base material. Moreover, since this sheet structure can be formed integrally with any given base material with ease using a simple device such as a heating roller, the minimum necessary varieties of inventories, as well as the volume of inventories, can be reduced. Further, it is possible for users to broaden stylish product line in a timely manner on their own.

## Claims

1. A sheet structure comprising:
a peelable transfer sheet having a convexo-concave shape reverse to a leather-like convexo-concave surface;
a film layer made of a film material coated on the transfer sheet; and
a porous layer formed on the film layer.

2. A sheet structure comprising:
a peelable transfer sheet having a convexo-concave shape reverse to a leather-like convexo-concave surface;
a film layer made of a film material filled only in concavities formed on the transfer sheet; and
a porous layer formed on the film layer.

3. The sheet structure according to claim 1 or 2, wherein the porous layer is formed of open-cell foam having a cell diameter ranging from 20 to 250 µm.

4. The sheet structure according to claim 1 or 2, wherein the porous layer is formed by coating an aqueous polyurethane dispersion solution containing at least base resin, which is foarned through agitation, on the film layer, followed by drying.

5. The sheet structure according to any one of claims 1 to 4, wherein a thermally-fused open-cell 1 foamed layer is formed on the porous layer.

6. The sheet structure according to claim 5, wherein the thermally-fused open-cell foamed layer is formed by coaling a thermally-fused aqueous polyurethane dispersion solution, which is foamed through agitation so that a specific gravity thereof is kept in a range from 0.10 to 0.7, on the porous layer, followed by drying.

7. A sheet structure constituted by combining together the sheet structure as set forth in claim 1 or 2 and a base material composed of a nonwoven fabric, a woven fabric, a knit, or the like, via an adhesive coated on a porous-layer side of the sheet structure or the base material in a dot-scattered manner.

8. The sheet structure according to claim 7, wherein the adhesive is made of a moisture-crosslinking type compound.

9. A method for manufacturing a sheet structure, comprising the steps of:
coating a film layer made of a film. material on a peelable transfer sheet having a convexo-concave shape reverse to a leather-like convexo-concave surface;
forming a porous layer on the film layer;
press-fitting a base material on the porous layer in an undried state; and
peeling off the transfer sheet.
